# EUROPEAN PATENT SPECIFICATION

(11) **EP 4 585 893 B1**
(45) Date of publication and mention of the grant of the patent: **17.06.2026**
(21) Application number: 24151752.3
(22) Date of filing: 15.01.2024
(51) Int. Cl.: G01M 3/32, G01S 7/497

(54) **IN-LINE LEAKAGE AND PERFORMANCE TEST SYSTEM**
INLINE-LECK- UND LEISTUNGSTESTSYSTEM
SYSTÈME DE TEST DE PERFORMANCE ET DE FUITE EN LIGNE

(43) Date of publication of application: 16.07.2025
(73) Proprietor: GM Cruise Holdings LLC, San Francisco CA 94103 (US)
(72) Inventor: WILLMS, Manuel, 85521 Ottobrunn (DE); GEHRT, Maximilian, 85521 Ottobrunn (DE)
(74) Representative: Manitz Finsterwald Patent- und Rechtsanwaltspartnerschaft mbB

(56) References cited:
- US-A1- 2005 241 384
- US-A1- 2022 091 170

## Description

### BACKGROUND

Testing a manufactured unit at the end of an assembly line is an important step in a production process. Based upon such testing, defective products are separated from the functional units, such that functional units (and not defective units) are shipped to a customer. End-of-line (EOL) testing assesses not only the quality of a product, but also the stability and yield of the production process.

In a specific example, radar sensors are typically tested before deployment. A radar sensor can include a housing that houses circuitry, where the circuitry includes antennas, digital signal processors (DSPs), and other associated circuitry. Radar sensors are often employed in environments where, if the circuitry were exposed to such environments (e.g., where it may be raining, snowing, where there may be extreme temperatures, and so forth), the circuitry may be damaged. For instance, radar sensors are currently being placed on vehicles, where outputs of the radar sensors are employed to control operation of the vehicles (e.g., the vehicles are autonomous vehicles or are equipped with driver-assistance functionality). Accordingly, the housing is configured to protect the circuitry from environmental conditions, such as rain, mist, snow, etc.

Therefore, in addition to testing functionality of the radar sensor (e.g., the radar sensor is accurately detecting objects at various locations in a field of view of the radar sensor), the housing of the radar sensor is tested for leaks. These tests require a significant amount of time, thereby increasing costs of radar sensors. US 2005/241384 A1 discloses a portable test station for testing electro-optical guidance assemblies. The system comprises separate, mobile carts for different test functions, including an electro-optical test unit for performance testing and a distinct leak test unit. Consequently, a guidance assembly must be physically moved between a fixture on the first cart for performance testing and a separate fixture on another cart for leak testing. The leak test unit is described as an external system that can pressurize the assembly with an inert gas or generate a vacuum to test for leaks.

### SUMMARY

The following is a brief summary of subject matter that is described in greater detail herein. This summary is not intended to be limiting as to the scope of the claims.

Various technologies described herein relate to systems and methods for performing leakage and performance tests on sensors devices. A testing system described herein is configured to perform multiple different tests on a sensor system (such as a radar system, lidar system, etc.) on a common platform (and thus does not require the transfer of the sensor devices to alternate platforms), where the tests include but are not limited to a performance test and a leakage test.

With more specificity, a testing system that facilitates performance of multiple tests on a sensor device is described herein. The sensor device comprises circuitry and a housing that houses the circuitry, and the housing of the sensor device comprises an aperture. The testing system includes a moveable platform that comprises a reception region that is configured to receive the sensor device, where the sensor device is securely fixable to the moveable platform when the sensor device is positioned in the reception region of the moveable platform. A vacuum nozzle is affixed to the moveable platform in the reception region such that the vacuum nozzle forms a seal surrounding the aperture of the housing of the sensor device when the sensor device is securely fixed to the moveable platform in the reception region of the moveable platform.

A vacuum system is fluidically coupled to the vacuum nozzle such that when the sensor device is positioned in the reception region and securely fixed to the moveable platform, fluid is able to flow between the housing and the vacuum system by way of the vacuum nozzle. The vacuum system is configured to evacuate fluid from the housing and generate a measurement pertaining to pressure associated with the housing while the fluid is evacuated from the housing. A computing system is configured to electrically couple to the sensor device, where the computing system is configured to evaluate measurements generated by the sensor device that correspond to different positions of the sensor device, and further where movement of the moveable platform places the sensor device at the different positions.

The above summary presents a simplified summary in order to provide a basic understanding of some aspects of the systems and/or methods discussed herein. This summary is not an extensive overview of the systems and/or methods discussed herein. It is not intended to identify key/critical elements or to delineate the scope of such systems and/or methods. Its sole purpose is to present some concepts in a simplified form as a prelude to the more detailed description that is presented later.

### BRIEF DESCRIPTION OF THE DRAWINGS

FIG. 1 is a functional block diagram of a sensor testing system.
FIG. 2 is a front elevational view of a sensor testing system.
FIG. 3 is a functional block diagram of a leakage test system included in the sensor testing system of FIGS. 1.
FIG. 4 is a schematic of a moveable platform for the sensor testing system of FIG. 1.
FIG. 5 is a flow diagram illustrating a method for operating a sensor testing system.
FIG. 6 is a flow diagram illustrating a method for making a sensor testing system.

### DETAILED DESCRIPTION

Various technologies pertaining to a sensor testing system that is configured to perform multiple different tests on a sensor device are now described with reference to the drawings, wherein like reference numerals are used to refer to like elements throughout. In the following description, for purposes of explanation, numerous specific details are set forth in order to provide a thorough understanding of one or more aspects. It may be evident, however, that such aspect(s) may be practiced without these specific details. In other instances, well-known structures and devices are shown in block diagram form in order to facilitate describing one or more aspects. Further, it is to be understood that functionality that is described as being carried out by certain system components may be performed by multiple components. Similarly, for instance, a component may be configured to perform functionality that is described as being carried out by multiple components.

Moreover, the term "or" is intended to mean an inclusive "or" rather than an exclusive "or." That is, unless specified otherwise, or clear from the context, the phrase "X employs A or B" is intended to mean any of the natural inclusive permutations. That is, the phrase "X employs A or B" is satisfied by any of the following instances: X employs A; X employs B; or X employs both A and B. In addition, the articles "a" and "an" as used in this application and the appended claims should generally be construed to mean "one or more" unless specified otherwise or clear from the context to be directed to a singular form.

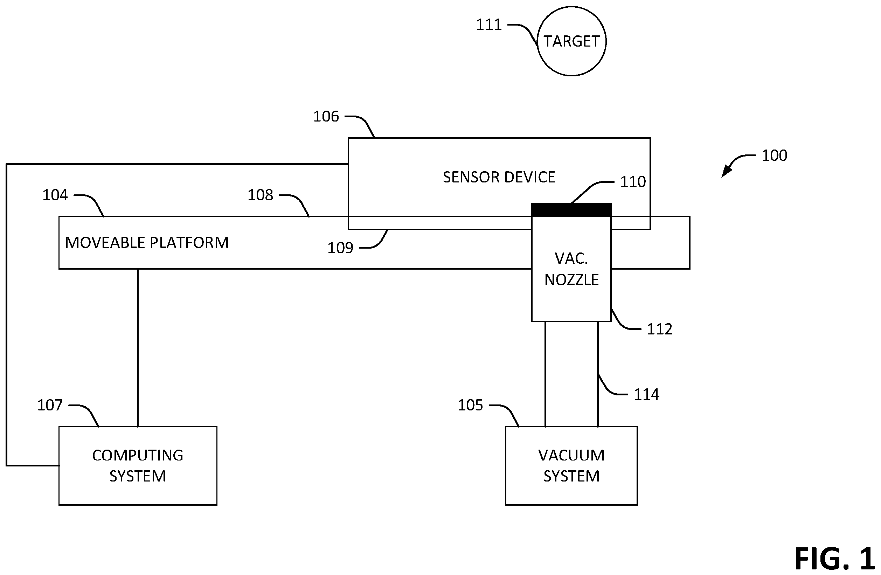

Referring now to FIG. 1, a functional block diagram of a sensor testing system 100 is shown. The sensor testing system 100 is configured to perform a performance test and a leakage test on a sensor device, such as a radar sensor, a lidar sensor, or other suitable sensor, where the sensor testing system 100 does not require movement of the sensor device across different platforms between when the performance test and the leakage test are performed. The sensor testing system 100 is particularly well-suited to perform multiple tests on a sensor device that is to be included in a vehicle, such as an autonomous vehicle and/or a vehicle that includes a driver-assistance system.

The performance test assesses the functionality of a sensor device. Performance of the performance test includes mobilizing the sensor device to different locations and obtaining measurements generated by the sensor device, where the measurements correspond to the different locations of the sensor device. The measurements can include range values between the sensor device and targets, elevation values between the sensor device and the targets, relative velocity values between the sensor device and the targets, and so forth. For example, the sensor device can generate a measurement that is indicative of distance between the sensor device and a target, where such distance is known *a priori.* Performance of the performance test includes comparing the measurement generated by the sensor device with the known distance (and repeating such comparisons for other types of measurements when the sensor device is positioned at different locations relative to the target and/or moved at different velocities relative to the target). When the distances, elevations, azimuths, velocities, etc. generated by the sensor device are sufficiently proximate to the actual distances, elevations, azimuths, velocities, etc., the sensor device passes the performance test. **In** an example, the sensor device passes the performance test when the measurements generated by the sensor device are within some predefined amount of the actual distances, elevations, azimuths, velocities, etc. (where the predefined amount may alter with category). The performance test can be performed before the leakage test is performed, after the leakage test performed, or without the leakage test being performed. Similarly, the leakage test can be performed without performing the performance test.

Contrarily, the leakage test is configured to test leakage of the housing of the sensor device. For example, the housing may include sidewalls that are coupled to one another by way of seals and/or adhesives that act as seals. Hence, performance of the leakage test can include applying a vacuum force on an interior of the housing and measuring pressure, where the sensor device passes the leakage test when the measured pressure is within a threshold amount of a predefined (acceptable) pressure.

Historically, performance tests are performed separately on separate platforms. More specifically, and in an example, the performance test is conducted by attaching the sensor device to a moveable arm in an environment that includes targets at known, predefined locations. After the performance test is completed, the sensor device is detached from the movable arm and coupled to a system that is configured to perform the leakage test. Attaching and detaching the sensor device to and from different platforms risks damage to the sensor device and further consumes time and resources. The sensor testing system 100 described herein improves upon this conventional approach, as the sensor testing system 100 is configured to allow for both performance testing and leakage testing, where a common platform is used for both types of testing.

The sensor testing system 100 comprises a moveable platform 104 that is configured to receive a sensor device 106. The sensor testing system 100 further includes a computing system 107 that is in communication with the moveable platform 104 and the sensor device 106. While the sensor testing system 100 is depicted as including the computing system 107 that is in communication with both the moveable platform 104 and the sensor device 106, in other embodiments the sensor testing system 100 can include multiple computing systems (e.g., a first computing system that is in communication with the moveable platform 104 that controls movement of the movable platform 104, a second computing system that is in communication with the sensor device 106 and is configured to obtain measurements from the sensor device 106 in connection with performing a performance test, and a third computing system that is in communication with a vacuum system 105 and is configured to obtain pressure measurements in connection with performing a leakage test). The sensor device 106, in an example, is any suitable sensor that is configured to determine the distance, angle, velocity, or any combination thereof, of objects relative to the sensor itself. For instance, the sensor device 106 is a radar device or a lidar device. **In** another example, the sensor device 106 is some other type of sensor that outputs data that is indicative of location of the sensor device 106 (such as a GPS sensor). **In** yet another example, the sensor device 106 is an inertial sensor, such as an accelerometer, a gyroscope, or the like. The computing system 107 can execute a control system (not shown) that can cause the moveable platform 104 to translate in three dimensions (e.g., in X, Y, and Z) and/or rotate about X, Y, and/or Z axes. **In** addition, the computing system 107 can cause the moveable platform to translate or rotate at desired velocities and accelerations.

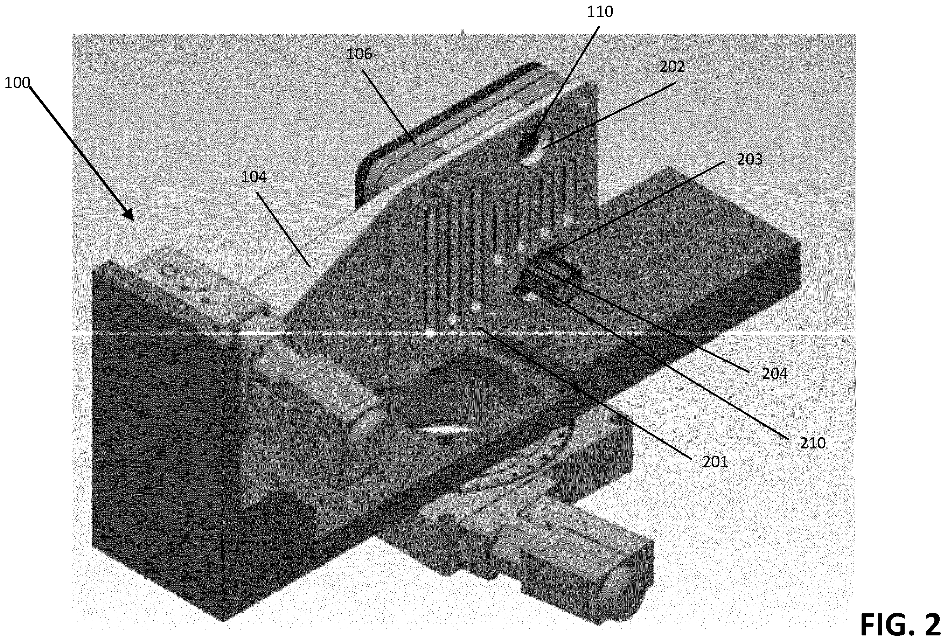

**In** some embodiments, the sensor testing system 100 comprises a two-axle gimbal system (further illustrated in FIG. 2), where a first gimbal can move and pivot the movable platform 104 about a first axis and a second gimbal can move and pivot the moveable platform 104 about a second axis, where the first axis is optionally orthogonal to the second axis. In another example, the sensor testing system 100 comprises a three-axle gimbal system. The moveable platform 104 comprises carbon fiber, plastic, or any other suitable material. The moveable platform 104 includes an arm that has a planar face 108 and a reception region that 109 is configured to accept the sensor device 106, where when the sensor device 106 is positioned in the reception region 109 and securely fastened to the movable platform 104, the sensor device 106 is appropriately oriented with respect to the movable platform 104. In some embodiments, the reception region 109 is an indentation in the planar face 108 within which the sensor device 106 can rest. In another example, the reception region 109 is a portion of the planar face 108 that is configured to receive the sensor device 106. The sensor device 106 can be secured to the moveable platform 104 with screws, clamps, or other mechanisms that can securely fix the sensor device 106 to the moveable platform 104.

In connection with conductance of a performance test, a target 111 can be placed at a known distance and orientation from a reference position of the moveable platform 104 when the moveable platform 104 is at a known position and orientation (e.g., an initial position and orientation). As noted above, the computing system 107 is configured to cause the moveable platform 104 to be moved (e.g., laterally along an axis or rotated about an axis) to different locations and orientations, and thus position the sensor device 106 at different locations and orientations relative to the target 111. When the sensor testing system 100 is employed to perform the performance test, the sensor device 106 is positioned in the reception region of the moveable platform 104 and secured to the moveable platform 104.

The sensor device 106 is then operated, such that the sensor device 106 outputs measurements relating to the distance, azimuth, elevation, and the like with respect to the target 111. In addition, the computing system 107 causes the moveable platform 104 to move as the sensor device 104 outputs the measurements. The computing system 107 receives the measurements and at least one of: positions of the moveable platform 104 that correspond to the measurements, orientations of the moveable platform 104 that correspond to the measurements, velocities of the movable platform 104 that correspond to the measurements (linear and rotational), or accelerations of the moveable platform 104 that correspond to the measurements (linear and rotational). The computing system 107 outputs an indication as to whether the sensor device 106 passes the performance test based upon the measurements and corresponding data referenced above. In other examples (such as when the sensor device 106 is a location sensor device), the sensor device 106 outputs location measurements (that are indicative of locations of the sensor device 106), and the computing system 107 receives such measurements and corresponding locations of the moveable platform 104. The computing system 107 outputs an indication as to whether the sensor device 106 passes the performance test based upon the measurement and the corresponding locations. Other examples are contemplated.

As noted above, the sensor testing system 100 is also configured to perform a leakage test with respect to the sensor device 106. To that end, the housing of the sensor device 106 comprises an aperture 110 by way of which fluid is able to flow into and out of the housing of the sensor device 106. For example, the aperture 110 can be a vent hole that is configured to allow fluid to exit the housing due to thermal expansion of air in the housing caused by heat emitted from circuitry of the sensor device 106. In a further example, the aperture 110 is a recessed or aperture that is configured to accept an electrical connector. In some embodiments, the moveable platform 104 comprises a vacuum nozzle 112 that includes a first end and a second end that is opposite the first end. When the sensor device 106 is positioned in the reception region of the platform 104 and secured to the platform 104, the vacuum nozzle 112 is aligned with the aperture 110 in the housing of the sensor device 106. Further, the vacuum nozzle 112 forms a seal around the aperture 110 at the first end of the vacuum nozzle when the sensor device 106 is positioned in the reception region 109 and secured to the platform 104 (e.g., the first end of the vacuum nozzle 112 includes a rubber gasket or other suitable seal that forms a seal around the aperture 110). In some embodiments, the aperture 110 is circular and the vacuum nozzle 112 has a circular cross-section, and the aperture 110 and the vacuum nozzle 112 are coaxial. The seal formed around the aperture 110 creates a fluid channel from the housing through the vacuum nozzle 112 while preventing fluid leakage through the aperture 110 into an external environment.

The sensor testing system 100 additionally includes a vacuum connector 114 that is fluidically coupled to the vacuum nozzle 112 at the second end of the vacuum nozzle and is further fluidically coupled to the vacuum system 105. In other words, the vacuum connector 114 fluidically couples the vacuum nozzle 112 to the vacuum system 105. The vacuum connector 114 can at least partially be formed of plastic, rubber, etc. The vacuum nozzle 112 and the vacuum connector 114 are coupled to prevent fluid leakage at an interface between the vacuum nozzle 112 and the vacuum connector 114. Therefore, when the sensor device 106 is securely fastened to the moveable platform 104 and the vacuum connector 114 is coupled to the vacuum nozzle 112, a fluid-tight connection is made between the sensor device 106 and the vacuum system 105. After the fluid-tight connection is created between the sensor device 106 and the vacuum system 105, the vacuum system 105 can be actuated by a user to perform a leakage test, and the vacuum system 105 evacuates fluid from the sensor device 106 at a given suction force. The vacuum system 105 also computes a value for atmospheric pressure inside of the housing of the sensor device 106. When the atmospheric pressure inside of the sensor device 106 is beneath a threshold, the sensor device 106 passes the leakage test. While not shown, optionally the vacuum system 105 is in communication with the computing system 107, where the computing system 107 can control operation of the vacuum system 105 and/or the computing system 107 can receive measurements generated by the vacuum system 105 and ascertain whether the sensor device 106 passes the leakage test based upon such measurements.

Referring to Fig. 2, a perspective view of componentry of the sensor testing system 100 is depicted. As illustrated in Fig. 2, the moveable platform 104 includes a planar region 201 that has two apertures 202 and 203 that extend therethrough. In the example illustrated in Fig. 2, the housing of the sensor device 106 includes two apertures: the aperture 110 (e.g., a vent hole) and a connector aperture 204. When the sensor device 106 is coupled to the moveable platform 104 (as illustrated in Fig. 2), the apertures 202 and 203 in the planar region of the moveable platform 104 are respectively aligned with the apertures 110 and 204 of the housing of the sensor device 106.

In the example depicted in Fig. 2, the moveable platform 104 does not have the vacuum nozzle 112. The connector aperture 204 is configured to snugly receive an electrical connector 210, where the electrical connector 210 can be coupled to electronics of the sensor device 106 by way of the connector aperture 204 (and through the second aperture 203 of the moveable platform 104). Due to the electrical connector 210 snugly fitting into the connector aperture 204, when the electrical connector 210 is connected to electronics of the sensor device 106, a relatively small amount of fluid is able to leak from the housing of the sensor device 106 at the exterior of the electrical connector 210.

While Fig. 2 depicts the sensor testing system 100 as including both the first aperture 202 and the second aperture 203, at least one of such apertures is optional. **In** an example, a seal can be placed around the vent hole 110, thereby substantially preventing fluid flow into and out of the sensor device 106 by way of the vent hole 110 (and thus there is no need for the first aperture 202). For example, the first aperture 202 can have a seal (e.g., a rubber seal) placed therein, thereby substantially preventing fluid leakage into and out of the sensor device 106 by way of the vent hole 110. Alternatively, the connector aperture 204 can be sealed, thereby making the second aperture 203 superfluous. Alternatively, the second aperture 203 can be sealed.

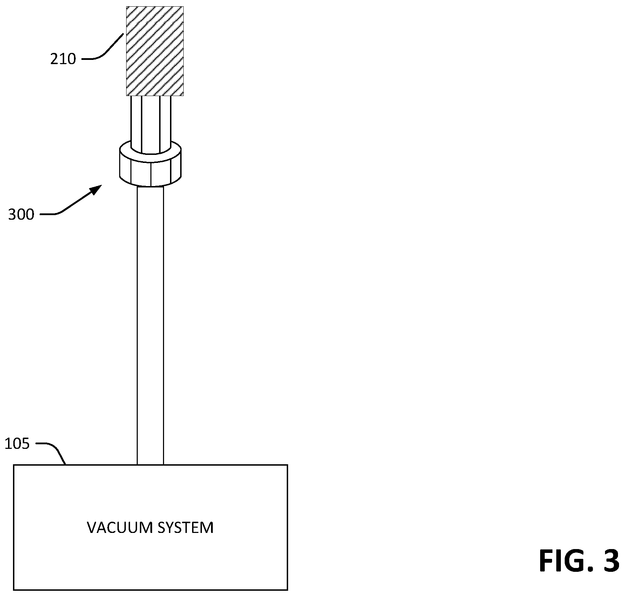

**In** Fig. 3, a schematic of componentry of the sensor testing system 100 is shown. Specifically, Fig. 3 depicts an adaptor 300 that can be included in the sensor testing system 100, where the adaptor 300 is fluidically coupled with the electrical connector 210 and is further fluidically coupled with the vacuum system 105. The adaptor 300 is configured to couple the electrical connector 210 and the vacuum system 105. More specifically, the adaptor 300 forms a fluidic connection between the electrical connector 210 and the vacuum system 105. When the electrical connector 210 is snugly fitted into the connector aperture 204, the vacuum system 105 can be actuated and the leakage test can be conducted by way of the electrical connector 114. While not shown, optionally, the vacuum system 105 is in communication with the computing system 107, where the computing system 107 can control operation of the vacuum system 105 and/or the computing system 107 can receive measurements generated by the vacuum system 105 and ascertain whether the sensor device 106 passes the leakage test based upon such measurements.

After the fluid-tight connection is created between the sensor device 106 and the vacuum system 105 by way of the electrical connector 210 and the adaptor 300, the vacuum system 105 can be actuated to perform a leakage test, and the vacuum system 105 evacuates fluid from the housing of the sensor device 106 at a given suction force. The vacuum system 105 (or computing system 107) also computes a value for atmospheric pressure inside of the housing of the sensor device 106 while the vacuum system 105 evacuates fluid. When the atmospheric pressure inside of the sensor device 106 is beneath a threshold, the sensor device 106 passes leakage test.

While not shown, in an example, the vacuum system 105 further includes a pneumatic control unit. The pneumatic control unit controls the pneumatic operations of the vacuum system 105 through configurable parameters. For example, the pneumatic control unit controls the force of the vacuum applied to the vacuum nozzle 112 from the vacuum system 105 through configurable parameters (e.g., PSI (1 PSI = 6.89 kPa) strength). In a further example, the pneumatic control unit controls the length of time that the vacuum is applied to the vacuum nozzle 112 from the vacuum system 105 through configurable parameters.

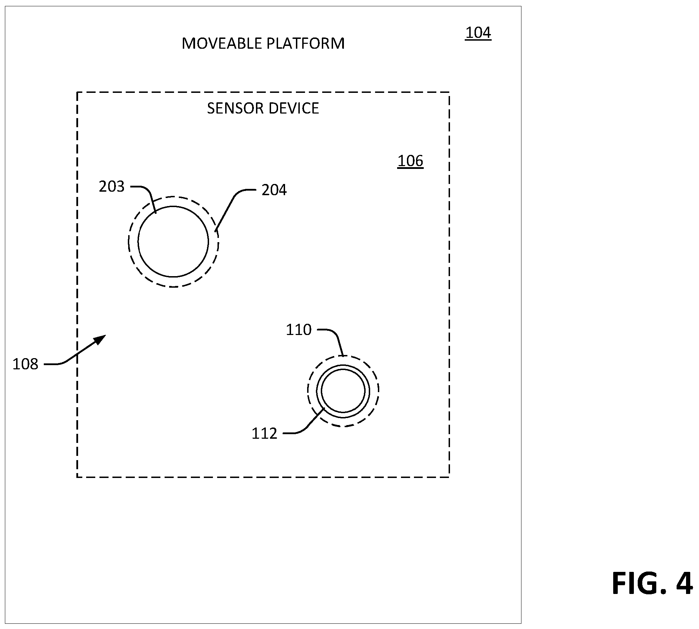

Referring now to FIG. 4, a schematic diagram of the moveable platform 104 with the sensor device 106 coupled thereto is shown. As indicated previously, the sensor device 106 can include two apertures: 1) the aperture 110 (e.g., a vent hole); and 2) the connector aperture 204. Fluid can be evacuated from either of these two apertures, while the other is sealed. There are a variety of approaches for evacuating fluid from one of the apertures while sealing the other, and several of such approaches are set forth below.

In a first example, the moveable platform 104 can include the vacuum nozzle 112. In an example, the vacuum nozzle 112 is integrally formed in the moveable platform 104. In another example, the vacuum nozzle 112 is removably attachable to the moveable platform 104. For example, the aperture 110 can be threaded and the vacuum nozzle 112 can have a correspondingly threaded exterior. When the sensor device 106 is coupled to the moveable platform 104 in the reception region 109 of the moveable platform 104 (and the vacuum nozzle 112 is coupled to the moveable platform 104 where applicable), the vacuum nozzle 112 is axially aligned with the aperture. Optionally, a backside of the moveable platform 104 can include a seal (e.g., a gasket) to form a seal around the aperture 110 of the sensor device 106, thereby substantially restricting flow of fluid exiting the aperture 110 to a channel defined by the vacuum nozzle 112. In such an example, the moveable platform 104 may not include the second aperture 203. When the sensor device 106 is attached to the moveable platform 104, due to the lack of the second aperture 203, the backside of the moveable platform 104 can act to substantially seal the connector aperture 204, thereby substantially preventing fluid leakage by way of the connector aperture 204 of the sensor device 106 (e.g., when vacuum force is applied by way of the vacuum nozzle 112). Optionally, the backside of the moveable platform 104 can include a seal (e.g., a rubber gasket) that is aligned with the connector aperture 204 of the sensor device 106 when the sensor device 106 is attached to the moveable platform 104 in the reception region 109 to further prevent fluid leakage by way of the connector aperture 204. In yet another example, when the moveable platform 104 includes the second aperture 203 but fluid is to be evacuated by way of the aperture 110 of the sensor device 106, the second aperture 203 of the moveable platform 203 can be sealed (e.g., covered with a circular seal) to substantially prevent fluid leakage by way of the connector aperture 204 (particularly when vacuum force is applied by way of the vacuum nozzle 112).

In a second example, fluid is evacuated by way of the connector aperture 204 of the sensor device 106. In such an example, the moveable platform 104 includes the second aperture 203 but optionally does not include the first aperture 202 (Fig. 2). When the sensor device 106 is coupled to the moveable platform 104 at the reception region 109, the connector aperture 204 of the sensor device 106 is aligned with the second aperture 203 of the moveable platform 104, such that a connector can be snuggly fit into the connector aperture 204 and fluid can be evacuated by way of the connector aperture 204 and the connector. In this example, when the moveable platform 104 fails to include the first aperture 202, the backside of the moveable platform 104 optionally includes a gasket that is approximately axially aligned with the aperture 110 of the sensor device 106, thus substantially preventing fluid leakage. When the moveable platform 104 includes the first aperture 202, such aperture 202 can be sealed by way of any suitable seal to prevent fluid leakage by way of the aperture 110 and the first aperture 202 of the moveable platform 104.

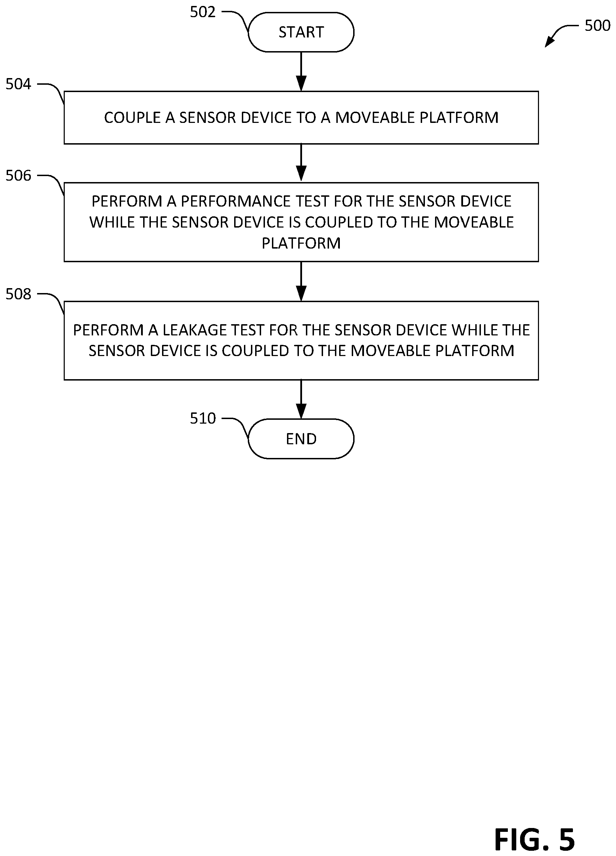

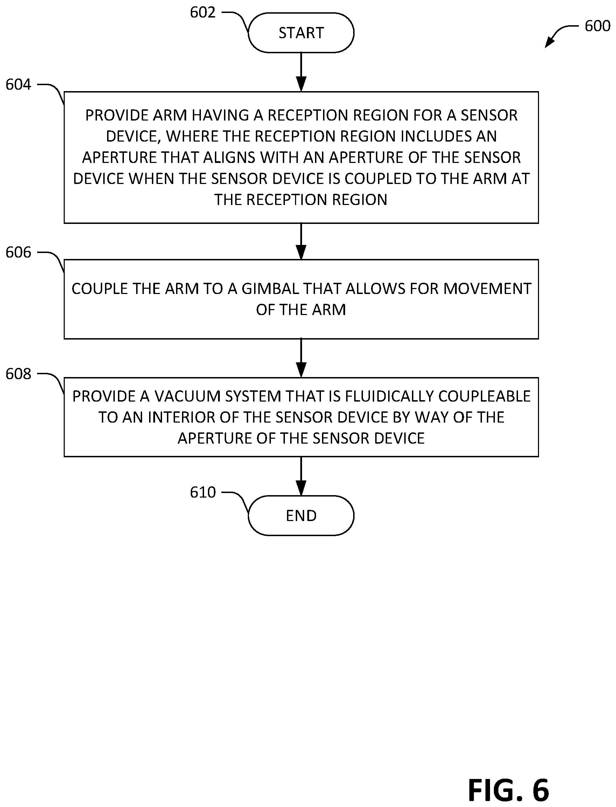

FIGS. 5 and 6 illustrate methodologies relating to operating and making a sensor testing system. While the methodologies are shown and described as being a series of acts that are performed in a sequence, it is to be understood and appreciated that the methodologies are not limited by the order of the sequence. For example, some acts can occur in a different order than what is described herein. In addition, an act can occur concurrently with another act. Further, in some instances, not all acts may be required to implement a methodology described herein.

With reference now solely to FIG. 5, a flow diagram that depicts a method 500 for using a testing system for performance of both a performance test and a leakage test for a sensor device is illustrated. The method 500 starts at 502, and at 504 a sensor device is coupled to a moveable platform. As described above, in an example, the sensor device is a radar sensor or a lidar sensor. The moveable platform includes a reception region that is configured to receive the sensor device, where the sensor device is removably attachable to the moveable platform in the reception region. The sensor device can be attached to the moveable platform by way of clamps, screws, or any other suitable fastening mechanism.

At 506, a performance test for the sensor device is performed while the sensor device is coupled to the moveable platform. Performance of the performance test includes moving the sensor device through manipulation of the moveable platform, where the sensor device is moved relative to targets that are at known positions. Performance of the performance test additionally includes obtaining, by a computing system, measurements output by the sensor device with respect to the targets. Performance of the performance test also includes comparing the measurements output by the sensor with known, correct values with respect to the target.

At 508, a leakage test is performed for the sensor device while the sensor device remains coupled to the moveable platform. Therefore, the sensor device need not be removed from the removable platform and taken to some other testing station to perform the leakage test. This is in contrast to conventional approaches. Put differently, the sensor device need not be decoupled from the moveable platform between when the performance test is performed and the leakage test is performed. In addition, while the method 500 illustrates the leakage test being performed after the performance test is performed, in other examples the leakage test is performed prior to the performance test being performed.

Performance of the leakage test includes fluidically coupling a vacuum system to an interior of the housing of the sensor device. As described above, the moveable platform can include or have attached thereto a vacuum nozzle, where the vacuum nozzle is aligned with a vent hole of the sensor device when the sensor device is positioned in the reception region of the moveable platform. A Fluid channel defines a pathway for fluid between the vacuum system and the interior of the housing. The vacuum system applies a vacuum force to the interior of the housing, and a pressure sensor outputs a value that is indicative of the pressure. A computing system compares a measured pressure with a predefined value, and a determination is made as to whether the sensor device passes the leakage test based upon the comparison.

In another example, performance of the leakage test includes application of a vacuum force to the interior of the housing by way of a connector aperture (e.g., which includes a female electrical receptacle). More specifically, a connector that includes a fluid passageway is snuggly fit into the connector aperture such that fluid can enter and exit the interior of the sensor device by way of the connector aperture and the connector. A fluid channel is coupled to the connector, defining a fluid passageway between the interior of the housing and the vacuum system. In this example, a vent hole of the sensor device can be sealed shut. The vacuum system applies a vacuum force to the interior of the housing (e.g., evacuates fluid from the interior of the housing), and a pressure sensor outputs a value that is indicative of pressure in the interior of the housing while the fluid is being evacuated from the interior of the housing. A computing system obtains the value and compares the value with a predetermined threshold; the computing system generates an output that indicates whether the sensor device passed the leakage test based upon such comparison. The method 500 completes at 510.

Now referring to FIG. 6, a flow diagram illustrating a method 600 for creating a sensor testing system is depicted. The method 600 starts at 602, and at 604 an arm having a reception region for a sensor device is provided. For instance, the arm can have a planar face, where a reception region is defined in the planar face. In an example, the planar face includes an indent that is configured to receive the sensor device. The reception region of the arm includes an aperture that extends through the arm. When the sensor device is coupled to the arm at the reception region, the aperture that extends through the arm aligns with one of a vent hole or a connector aperture of the sensor device. For example, an axis of the aperture is coincident with an axis of the vent hole or an axis of the connector aperture. In another example, the reception region can include two apertures: a first aperture that is aligned with the vent hole of the sensor device and a second aperture that is aligned with the connector aperture of the sensor device (when the sensor device is coupled to the arm at the reception region).

At 608, a vacuum system is provided, where the vacuum system is fluidically coupleable to an interior of the sensor device by way of the aperture of the sensor device. As described previously, a vacuum nozzle can be coupled to the aperture of the arm, such that the vacuum nozzle facilitates fluid evacuation from the interior of the sensor device. The vacuum system applies a vacuum force to the interior of the sensor device by way of the vacuum nozzle. The method 600 completes at 610.

Various features are described herein in accordance with at least the following examples.

What has been described above includes examples of one or more embodiments. It is, of course, not possible to describe every conceivable modification and alteration of the above devices or methodologies for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims. Furthermore, to the extent that the term "includes" is used in either the detailed description or the claims, such term is intended to be inclusive in a manner similar to the term "comprising" as "comprising" is interpreted when employed as a transitional word in a claim.

## Claims

1. A testing system (100) that facilitates performance of multiple tests on a sensor device (106), where the sensor device (106) comprises circuitry and a housing that houses the circuitry, and further where the housing of the sensor device (106) comprises an aperture (110), the testing system (100) comprising:
a moveable platform (104) that comprises a reception region (109) that is configured to receive the sensor device (106), where the sensor device (106) is securely fixable to the moveable platform (104) when the sensor device (106) is positioned in the reception region (109) of the moveable platform (104); and
a vacuum nozzle (112) affixed to the moveable platform (104) in the reception region (109) such that the vacuum nozzle (112) forms a seal surrounding the aperture (110) of the housing of the sensor device (106) when the sensor device (106) is securely fixed to the moveable platform (104) in the reception region (109) of the moveable platform (104);
where a vacuum system (105) is fluidically coupled to the vacuum nozzle (112) such that when the sensor device (106) is positioned in the reception region (109) and securely fixed to the moveable platform (104), fluid is able to flow between the housing and the vacuum system (105) by way of the vacuum nozzle (112), and further where the vacuum system (105) is configured to evacuate fluid from the housing and generate a measurement pertaining to pressure associated with the housing while the fluid is evacuated from the housing;
**characterized in that** a computing system (107) is configured to electrically couple to the sensor device (106), where the computing system (107) is configured to evaluate measurements generated by the sensor device (106) that correspond to different positions of the sensor device (106), where movement of the moveable platform (104) places the sensor device (106) at the different positions.

2. The testing system (100) of claim 1, wherein the test system (100) further comprises a gimble system, wherein the moveable platform (104) is attached to the gimble system having at least one rotational axle, where movement of the rotational axle moves the moveable platform (104) to different positions.

3. The testing system (100) of at least one of claims 1-2, wherein a target (111) is positioned in a field of view of the sensor device (106), and further where the sensor device (106) outputs a measurement that is indicative of at least one parameter of the target (111) while the sensor is at different positions relative to the target (111).

4. The testing system (100) of at least one of claims 1-3, wherein the moveable platform (104) comprises carbon fiber.

5. The testing system (100) of at least one of claims 1-4, wherein the sensor device (106) configured to be affixed to the moveable platform (104) with screws.

6. The testing system (100) of at least one of claims 1-5, where the computing system (107) compares the measurement pertaining to pressure associated with the housing while fluid is evacuated from the housing with a predetermined pressure value, and further where the computing system (107) returns a result based upon a comparison between the measurement pertaining to pressure and the predetermined pressure value.

7. The testing system (100) of at least one of claims 1-6, wherein the vacuum system (105) has a pneumatic control unit, where the pneumatic control unit controls a vacuum force exerted on the sensor device (106) and a holding time that the vacuum force is applied for.

8. The testing system (100) of claim 7, wherein the vacuum force and the holding time are configurable through the vacuum system (105) by a user.

9. The testing system (100) of at least one of claims 1-8, wherein the housing of the sensor device (106) has a second aperture (110).

10. The testing system (100) of claim 9, further comprising a seal that seals the second aperture (110) while the testing system (100) is used to obtain the measurement pertaining to pressure associated with the housing from the aperture (110), where the seal prevents fluid from flowing through the second aperture (110).

11. The testing system (100) of at least one of claims 1-10, where the sensor device (106) is one of a radar sensor or a lidar sensor.

12. A method (500) for performing both a measurement test and a performance test on a sensor device (106), the method (500) comprising:
coupling (504) the sensor device (106) to a moveable platform (104), where the sensor device (106) is coupled to the moveable platform (104) at a reception region (109) of the moveable platform (104), and further where an aperture (110) of the sensor device (106) is coaxial with an aperture (110) of the moveable platform (104) upon the sensor device (106) being coupled to the moveable platform (104);
performing (508) a leakage test with respect to the sensor device (106) while the sensor device (106) is coupled to the moveable platform (104), where performing the leakage test comprises evacuating fluid from an interior of the sensor device (106) by way of the aperture (110) of the sensor device (106);
**characterized in**
performing a performance test (506) with respect to the sensor device (106) while the sensor device (106) is coupled to the moveable platform (104), where performing the performance test comprises altering position of the moveable platform (104) while the sensor device (106) generates measurements.

13. The method (500) of claim 12, where the sensor device (106) remains coupled to the moveable arm between performance of the performance test and performance of the leakage test.

14. The method (500) of at least one of claims 12-13, where a vacuum nozzle (112) is attached to the moveable platform (104) at the aperture (110) of the moveable platform (104), where performing the leakage test comprises evacuating the fluid from the interior of the sensor device (106) by way of the vacuum nozzle (112).

15. The method (500) of at least one of claims 12-14, where the aperture (110) of the sensor device (106) is a connector aperture (110).

## Patentansprüche

1. Testsystem (100), das die Durchführung mehrerer Tests an einer Sensorvorrichtung (106) ermöglicht, wobei die Sensorvorrichtung (106) eine Schaltung und ein Gehäuse, das die Schaltung aufnimmt, umfasst, und wobei ferner das Gehäuse der Sensorvorrichtung (106) eine Öffnung (110) umfasst, wobei das Testsystem (100) umfasst:
eine bewegliche Plattform (104), die einen Aufnahmebereich (109) umfasst, der ausgestaltet ist, um die Sensorvorrichtung (106) aufzunehmen, wobei die Sensorvorrichtung (106) sicher an der beweglichen Plattform (104) fixierbar ist, wenn die Sensorvorrichtung (106) in dem Aufnahmebereich (109) der beweglichen Plattform (104) positioniert ist; und
eine Vakuumdüse (112), die an der beweglichen Plattform (104) in dem Aufnahmebereich (109) befestigt ist, sodass die Vakuumdüse (112) eine Dichtung bildet, die die Öffnung (110) des Gehäuses der Sensorvorrichtung (106) umgibt, wenn die Sensorvorrichtung (106) sicher an der beweglichen Plattform (104) in dem Aufnahmebereich (109) der beweglichen Plattform (104) fixiert ist;
wobei ein Vakuumsystem (105) fluidisch mit der Vakuumdüse (112) gekoppelt ist, sodass, wenn die Sensorvorrichtung (106) in dem Aufnahmebereich (109) positioniert und sicher an der beweglichen Plattform (104) fixiert ist, Fluid zwischen dem Gehäuse und dem Vakuumsystem (105) mittels der Vakuumdüse (112) strömen kann, und wobei ferner das Vakuumsystem (105) ausgestaltet ist, um Fluid aus dem Gehäuse herauszupumpen und einen Messwert zu erzeugen, der sich auf den Druck bezieht, der dem Gehäuse zugeordnet ist, während das Fluid aus dem Gehäuse herausgepumpt wird;
**dadurch gekennzeichnet, dass** ein Rechensystem (107) so ausgestaltet ist, dass es elektrisch mit der Sensorvorrichtung (106) gekoppelt ist, wobei das Rechensystem (107) ausgestaltet ist, um Messwerte zu bewerten, die von der Sensorvorrichtung (106) erzeugt werden, die verschiedenen Positionen der Sensorvorrichtung (106) entsprechen, wobei die Bewegung der beweglichen Plattform (104) die Sensorvorrichtung (106) an den verschiedenen Positionen platziert.

2. Testsystem (100) nach Anspruch 1, wobei das Testsystem (100) ferner ein Kardansystem umfasst, wobei die bewegliche Plattform (104) an dem Kardansystem, das mindestens eine Drehachse aufweist, befestigt ist, wobei die Bewegung der Drehachse die bewegliche Plattform (104) in verschiedene Positionen bewegt.

3. Testsystem (100) nach mindestens einem der Ansprüche 1-2, wobei ein Ziel (111) in einem Sichtfeld der Sensorvorrichtung (106) positioniert ist, und wobei ferner die Sensorvorrichtung (106) einen Messwert ausgibt, der mindestens einen Parameter des Ziels (111) angibt, während sich der Sensor an verschiedenen Positionen relativ zu dem Ziel (111) befindet.

4. Testsystem (100) nach mindestens einem der Ansprüche 1-3, wobei die bewegliche Plattform (104) Karbonfaser umfasst.

5. Testsystem (100) nach mindestens einem der Ansprüche 1-4, wobei die Sensorvorrichtung (106) so ausgestaltet ist, dass sie an der beweglichen Plattform (104) mit Schrauben befestigt ist.

6. Testsystem (100) nach mindestens einem der Ansprüche 1-5, wobei das Rechensystem (107) den Messwert, der sich auf den Druck bezieht, der dem Gehäuse zugeordnet ist, während Fluid aus dem Gehäuse herausgepumpt wird, mit einem vorbestimmten Druckwert vergleicht, und wobei ferner das Rechensystem (107) ein Ergebnis basierend auf einem Vergleich zwischen dem Messwert, der sich auf den Druck bezieht, und dem vorbestimmten Druckwert zurückgibt.

7. Testsystem (100) nach mindestens einem der Ansprüche 1-6, wobei das Vakuumsystem (105) eine Pneumatiksteuereinheit aufweist, wobei die Pneumatiksteuereinheit eine Vakuumkraft, die auf die Sensorvorrichtung (106) ausgeübt wird, und eine Haltezeit, für die die Vakuumkraft angewendet wird, steuert.

8. Testsystem (100) nach Anspruch 7, wobei die Vakuumkraft und die Haltezeit durch das Vakuumsystem (105) durch einen Benutzer konfigurierbar sind.

9. Testsystem (100) nach mindestens einem der Ansprüche 1-8, wobei das Gehäuse der Sensorvorrichtung (106) eine zweite Öffnung (110) aufweist.

10. Testsystem (100) nach Anspruch 9, ferner umfassend eine Dichtung, die die zweite Öffnung (110) abdichtet, während das Testsystem (100) verwendet wird, um den Messwert, der sich auf den Druck bezieht, der dem Gehäuse zugeordnet ist, von der Öffnung (110) zu erhalten, wobei die Dichtung verhindert, dass Fluid durch die zweite Öffnung (110) strömt.

11. Testsystem (100) nach mindestens einem der Ansprüche 1-10, wobei die Sensorvorrichtung (106) eines von einem Radarsensor oder einem Lidarsensor ist.

12. Verfahren (500) zum Durchführen sowohl eines Messtests als auch eines Leistungstests an einer Sensorvorrichtung (106), wobei das Verfahren (500) umfasst:
Koppeln (504) der Sensorvorrichtung (106) mit einer beweglichen Plattform (104), wobei die Sensorvorrichtung (106) mit der beweglichen Plattform (104) an einem Aufnahmebereich (109) der beweglichen Plattform (104) gekoppelt ist, und wobei ferner eine Öffnung (110) der Sensorvorrichtung (106) koaxial mit einer Öffnung (110) der beweglichen Plattform (104) ist, wenn die Sensorvorrichtung (106) mit der beweglichen Plattform (104) gekoppelt ist;
Durchführen (508) eines Leckagetests in Bezug auf die Sensorvorrichtung (106), während die Sensorvorrichtung (106) mit der beweglichen Plattform (104) gekoppelt ist, wobei das Durchführen des Leckagetests das Absaugen von Fluid aus einem Inneren der Sensorvorrichtung (106) mittels der Öffnung (110) der Sensorvorrichtung (106) umfasst;
**gekennzeichnet durch**
Durchführen eines Leistungstests (506) in Bezug auf die Sensorvorrichtung (106), während die Sensorvorrichtung (106) mit der beweglichen Plattform (104) gekoppelt ist, wobei das Durchführen des Leistungstests das Ändern der Position der beweglichen Plattform (104) umfasst, während die Sensorvorrichtung (106) Messwerte erzeugt.

13. Verfahren (500) nach Anspruch 12, wobei die Sensorvorrichtung (106) zwischen der Durchführung des Leistungstests und der Durchführung des Leckagetests mit dem beweglichen Arm gekoppelt bleibt.

14. Verfahren (500) nach mindestens einem der Ansprüche 12-13, wobei eine Vakuumdüse (112) an der beweglichen Plattform (104) an der Öffnung (110) der beweglichen Plattform (104) befestigt ist, wobei das Durchführen des Leckagetests das Absaugen des Fluids aus dem Inneren der Sensorvorrichtung (106) mittels der Vakuumdüse (112) umfasst.

15. Verfahren (500) nach mindestens einem der Ansprüche 12-14, wobei die Öffnung (110) der Sensorvorrichtung (106) eine Verbinderöffnung (110) ist.

## Revendications

1. Système de test (100) qui facilite l'exécution de plusieurs tests sur un dispositif capteur (106), dans lequel le dispositif capteur (106) comprend un circuit et un boîtier qui abrite le circuit, et dans lequel le boîtier du dispositif capteur (106) comprend une ouverture (110), le système de test (100) comprenant :
une plate-forme mobile (104) qui comprend une zone de réception (109) configurée pour recevoir le dispositif capteur (106), le dispositif capteur (106) pouvant être solidement fixé à la plate-forme mobile (104) lorsque le dispositif capteur (106) est positionné dans la zone de réception (109) de la plate-forme mobile (104) ; et
une buse à vide (112) fixée à la plate-forme mobile (104) dans la zone de réception (109) de telle sorte que la buse à vide (112) forme un joint entourant l'ouverture (110) du boîtier du dispositif capteur (106) lorsque le dispositif capteur (106) est solidement fixé à la plate-forme mobile (104) dans la zone de réception (109) de la plate-forme mobile (104) ;
dans lequel un système de vide (105) est couplé fluidiquement à la buse à vide (112) de telle sorte que lorsque le dispositif capteur (106) est positionné dans la zone de réception (109) et solidement fixé à la plate-forme mobile (104), un fluide peut s'écouler entre le boîtier et le système de vide (105) via la buse à vide (112), et en outre dans lequel le système de vide (105) est configuré pour évacuer le fluide du boîtier et générer une mesure relative à la pression associée au boîtier pendant que le fluide est évacué du boîtier ;
**caractérisé en ce qu'**un système informatique (107) est configuré pour se coupler électriquement au dispositif capteur (106), le système informatique (107) étant configuré pour évaluer des mesures générées par le dispositif capteur (106) qui correspondent à différentes positions du dispositif capteur (106), le mouvement de la plate-forme mobile (104) plaçant le dispositif capteur (106) dans les différentes positions.

2. Système de test (100) selon la revendication 1, dans lequel le système de test (100) comprend en outre un système à cardan, dans lequel la plate-forme mobile (104) est fixée au système à cardan ayant au moins un axe de rotation, le mouvement de l'axe de rotation déplaçant la plate-forme mobile (104) vers différentes positions.

3. Système de test (100) selon au moins l'une des revendications 1 à 2, dans lequel une cible (111) est positionnée dans un champ de vision du dispositif capteur (106), et en outre dans lequel le dispositif capteur (106) délivre une mesure indicative d'au moins un paramètre de la cible (111) pendant que le capteur se trouve dans différentes positions par rapport à la cible (111).

4. Système de test (100) selon au moins l'une des revendications 1 à 3, dans lequel la plate-forme mobile (104) comprend de la fibre de carbone.

5. Système de test (100) selon au moins l'une des revendications 1 à 4, dans lequel le dispositif capteur (106) est configuré pour être fixé à la plate-forme mobile (104) à l'aide de vis.

6. Système de test (100) selon au moins l'une des revendications 1 à 5, dans lequel le système informatique (107) compare la mesure relative à la pression associée au boîtier pendant que le fluide est évacué du boîtier avec une valeur de pression prédéterminée, et en outre dans lequel le système informatique (107) renvoie un résultat basé sur une comparaison entre la mesure relative à la pression et la valeur de pression prédéterminée.

7. Système de test (100) selon au moins l'une des revendications 1 à 6, dans lequel le système de vide (105) comporte une unité de commande pneumatique, l'unité de commande pneumatique commandant une force de vide exercée sur le dispositif capteur (106) et un temps de maintien pendant lequel la force de vide est appliquée.

8. Système de test (100) selon la revendication 7, dans lequel la force de vide et le temps de maintien sont configurables via le système de vide (105) par un utilisateur.

9. Système de test (100) selon au moins l'une des revendications 1 à 8, dans lequel le boîtier du dispositif capteur (106) comporte une deuxième ouverture (110).

10. Système de test (100) selon la revendication 9, comprenant en outre un joint qui scelle la deuxième ouverture (110) pendant que le système de test (100) est utilisé pour obtenir la mesure relative à la pression associée au boîtier à partir de l'ouverture (110), le joint empêchant le fluide de s'écouler à travers la deuxième ouverture (110).

11. Système de test (100) selon au moins l'une des revendications 1 à 10, dans lequel le dispositif capteur (106) est un capteur radar ou un capteur lidar.

12. Procédé (500) pour effectuer à la fois un test de mesure et un test de performance sur un dispositif capteur (106), le procédé (500) consistant à :
coupler (504) le dispositif capteur (106) à une plate-forme mobile (104), dans lequel le dispositif capteur (106) est couplé à la plate-forme mobile (104) au niveau d'une zone de réception (109) de la plate-forme mobile (104), et en outre dans lequel une ouverture (110) du dispositif capteur (106) est coaxiale avec une ouverture (110) de la plate-forme mobile (104) lorsque le dispositif capteur (106) est couplé à la plate-forme mobile (104) ;
effectuer (508) un test de fuite par rapport au dispositif capteur (106) pendant que le dispositif capteur (106) est couplé à la plate-forme mobile (104), dans lequel l'exécution du test de fuite comprenant l'évacuation de fluide d'un intérieur du dispositif capteur (106) via l'ouverture (110) du dispositif capteur (106) ;
**caractérisé par**
l'exécution d'un test de performance (506) par rapport au dispositif capteur (106) pendant que le dispositif capteur (106) est couplé à la plate-forme mobile (104), dans lequel l'exécution du test de performance comprend le fait de modifier la position de la plate-forme mobile (104) pendant que le dispositif capteur (106) génère des mesures.

13. Procédé (500) selon la revendication 12, dans lequel le dispositif capteur (106) reste couplé au bras mobile entre l'exécution du test de performance et l'exécution du test de fuite.

14. Procédé (500) selon au moins l'une des revendications 12 à 13, dans lequel une buse à vide (112) est fixée à la plate-forme mobile (104) au niveau de l'ouverture (110) de la plate-forme mobile (104), dans lequel l'exécution du test de fuite comprend le fait d'évacuer du fluide de l'intérieur du dispositif capteur (106) via la buse à vide (112).

15. Procédé (500) selon au moins l'une des revendications 12 à 14, dans lequel l'ouverture (110) du dispositif capteur (106) est une ouverture de connecteur (110).
